# EUROPÄISCHE PATENTSCHRIFT

(11) **EP 3 706 970 B1**
(45) Veröffentlichungstag und Bekanntmachung des Hinweises auf die Patenterteilung: **22.02.2023**
(21) Anmeldenummer: 18803882.2
(22) Anmeldetag: 02.11.2018
(51) Int. Cl.: B27D 5/00, B27M 1/08

(54) **KANTENVERARBEITUNGSANLAGE**
EDGEBANDING SYSTEM
DISPOSITIF DE BORDURAGE

(30) Priorität: 07.11.2017 DE 102017125936
(43) Veröffentlichungstag der Anmeldung: 16.09.2020
(73) Patentinhaber: IMA Schelling Deutschland GmbH, 32312 Lübbecke (DE)
(72) Erfinder: HAMPEL, Thomas, 32312 Lübbecke (DE); HÜSENER, Stefan, 32479 Hille (DE); KOTTKAMP, Tim, 32312 Lübbecke (DE); SEIFERT, Uwe, 32361 Preußisch Oldendorf (DE)
(74) Vertreter: Schober, Mirko
(86) Internationale Anmeldenummer: PCT/EP2018/079969
(87) Internationale Veröffentlichungsnummer: WO 2019/091857

(56) Entgegenhaltungen:
- EP-A1- 1 977 869
- DE-A1-102013 001 893
- DE-A1-102015 213 358
- DE-A1-102016 224 488

## Beschreibung

### Technisches Gebiet

Die Erfindung betrifft eine Kantenverarbeitungsanlage, gemäß dem Oberbegriff des Anspruchs 1. Eine solche Kantenverarbeitungsanlage ist aus dem Dokument DE102015213358 A1 bekannt.

Platten aus Holz, Holzwerkstoffen werden mit Kantenverarbeitungsmaschinen an ihren Schmalseiten mit unter"schiedlichsten Kantenbändern (im Folgenden auch kurz "Kanten" genannt) versehen. Die Kantenbänder haben dabei unterschiedlichste Breiten, Farben, Dekore und Dicken und bestehen aus unterschiedlichen Materialien. In der laufenden Produktion muss daher eine große Anzahl unterschiedlicher Kantenbänder vorgehalten werden. Die zu verarbeitenden Kantenbänder werden hierzu von Rollen kommend dem Kantenmagazin der Kantenverarbeitungsmaschine zugeführt. Die Rollen werden in entsprechenden Bevorratungsvorrichtungen wie z. B. Rollenmagazinen bereitgestellt, die in der Nähe der Kantenmagazine angeordnet sind. Ein Maschinenbediener, der die Rollenmagazine entsprechend bestückt hat, führt die freien Enden des Kantenbandes zum Kantenmagazin, von wo es der Kantenverarbeitungsmaschine gemäß dem von der Maschinensteuerung vorgegebenen Fertigungsschritt dann automatisch zugeführt wird.

Die Größe eines Rollenmagazins ist abhängig von der Verarbeitungsgeschwindigkeit der Kantenverarbeitungsmaschine, von den Auftragsgrößen und der Kapazität des Bedieners.

### Stand der Technik

Um das Handling der Kanten zu vereinfachen, ist vorgeschlagen worden, das Kantenband anstatt auf Rollen in Kantenkassetten, wie sie beispielsweise in der EP 1 862 949 B1 offenbart sind, vorzusehen. Die einheitlichen Abmessungen können das Handling der Kanten vereinfachen. Bei einem Kassettenvorrat vor einem Kantenmagazin sind die Ablageplätze einheitlich. DE 10 2009 010 792 A1 offenbart einem Mehrachsroboter, der die Bestückung des Kantenmagazins aus dem Kassettenvorrat heraus übernimmt, was den Bestückungsprozess schneller und sicherer macht.

Eine gleichartige Vorrichtung beschreibt die EP 2 505 322 B1, bei der die Kantenbandzuführung ebenfalls automatisch erfolgt, allerdings ohne einen Mehrachsroboter. Dabei ist die Anlage so ausgelegt, dass die Bestückung des Kantenmagazins aus zwei Magazinen erfolgen kann. Eine weitere Vorrichtung dieser Art ist in EP 1 977 869 A1 beschrieben.

Aus DE 10 2015 213358 A1 und DE 10 2014 224488 A1 sind Vorrichtungen nach dem Oberbegriff des Anspruchs 1 bekannt.

Bei den beschriebenen Lösungen ist die Kapazität der Rollen- bzw. Kassettenvorräte begrenzt, so dass die Entfernung leerer Rollen oder Kassetten manuell erfolgen muss, genauso wie die Bestückung der Magazine.

### Die Erfindung

Aufgabe der Erfindung ist es, auf möglichst einfache Weise einen größeren Vorrat an Kantenbändern vorzuhalten, um die Flexibilität der Kantenverarbeitungsanlagen zu erhöhen.

Gelöst wird die Aufgabe durch eine Kantenverarbeitungsanlage mit den Merkmalen des Anspruchs 1. Vorteilhafte Ausführungsformen sind Gegenstand der Unteransprüche.

Erfindungsgemäß ist eine Kantenverarbeitungsanlage vorgesehen, welche wenigstens eine Kantenverarbeitungsmaschine, an welcher ein Kantenmagazin angebracht ist, und wenigstens einen in räumlicher Nähe zum Kantenmagazin der Kantenverarbeitungsmaschine angeordneten Primärkassettenvorrat aufweist. Dieser weist wiederum eine Mehrzahl Aufnahmeplätze auf, in welche Kassetten aufgenommen werden können oder sind, die jeweils ein Kantenband beinhalten.

zudem weist die Kantenverarbeitungsanlage wenigstens einen vom Primärkantenvorrat verschiedenen Sekundärkassettenvorrat auf, welcher räumlich separat von dem Primärkassettenvorrat angeordnet ist. Dieser Sekundärkassettenvorrat muss nicht so ausgelegt sein, dass das Kantenmagazin von dort aus direkt bestückt werden kann, sondern dient als nahestehender Stauraum, von dem aus der Primärkassettenvorrat bestückt werden kann, ohne dass große Wege dabei zurückgelegt werden müssen. Die Bestückung kann schnell und damit zeitnah erfolgen.

Erfindungsgemäß umfasst der Sekundärkassettenvorrat eine Vorratsbedienungseinrichtung, die dazu ausgelegt ist,
i) eine Kassette innerhalb des Sekundärkassettenvorrats aus einem dortigen Ablageplatz zu entnehmen; und/ oder
ii) eine Kassette innerhalb des Sekundärkassettenvorrats in einen dortigen Ablageplatz abzulegen.

Bevorzugt umfasst die Kantenverarbeitungsanlage ein zentrales Kantenlager, welches über Transportvorrichtungen mit wenigstens einem Sekundärkassettenvorrat, bevorzugt zwei Sekundärkassettenvorräten, und/oder wenigstens einem Primärkassettenvorrat logistisch verbunden ist. Bevorzugt ist hierbei insbesondere, dass die Transportvorrichtungen Transportmittel umfassen, welche dazu ausgelegt sind, im zentralen Kantenlager bevorratete Kassetten von dem zentralen Kantenlager zu wenigstens einem Sekundärkassettenvorrat zu befördern oder/und Kassetten aus wenigstens einem Sekundärkassettenvorrat und/oder einem Primärkassettenvorrat zum zentralen Kantenlager zu befördern.

Die Kantenverarbeitungsanlage umfasst wenigstens eine automatisierte Manipulationsvorrichtung. Diese automatisierte Manipulationsvorrichtung kann verschiedene Aufgaben der Versorgung der Kantenverarbeitungsmaschine übernehmen, so dass diese nicht mehr händisch ausgeführt werden müssen. Die automatisierte Manipulationsvorrichtung, die zum Beispiel als Roboter ausgebildet sein kann, ist dazu ausgelegt, Kassetten aus dem Primärkassettenvorrat in den Sekundärkassettenvorrat und/oder aus dem Sekundärkassettenvorrat in den Primärkassettenvorrat zu überführen.

Die automatische Manipulationsvorrichtung kann in einer weiteren bevorzugten Ausführungsform ein Kantenband, welches sich in einer im Primärkassettenvorrat an einem Aufnahmeplatz befindlichen Kassette befindet, dem Kantenmagazin der Kantenverarbeitungsmaschine zuführen oder/und aus dem Kantenmagazin wieder in die Kassette zurückziehen. Die automatisierte Manipulationsvorrichtung kann die Kassette auf einer, insbesondere als Kassettentransportwagen ausgebildeten, Kassettentransporteinrichtung ablegen oder aus dieser entnehmen.

Für jede dieser Aufgaben kann eine eigene Manipulationsvorrichtung eingesetzt werden. Es ist allerdings auch möglich, dass eine Manipulationsvorrichtung mehrere der Tätigkeiten übernimmt.

In einer ganz besonders bevorzugten Ausführungsform kann die automatisierte Manipulationsvorrichtung auch mehrere oder alle aufgeführten Aufgaben übernehmen. Somit kann zum einen der Bediener entlastet und zum anderen der Bestückungsprozess beschleunigt werden.

Eine derartige Kantenverarbeitungsanlage ist nicht dadurch beschränkt, dass der Sekundärkassettenvorrat in unmittelbarer Nähe des Primärkassettenvorrats angeordnet ist. Es ist durchaus möglich, ein größeres Lager in der Nähe der Kantenverarbeitungsmaschine anzuordnen oder einen Sekundärkassettenvorrat für mehr als eine Kantenverarbeitungsmaschine bereitzustellen. In einer weiteren bevorzugten Ausführungsform ist der wenigstens eine Sekundärkassettenvorrat auf dem Boden benachbart zu einer zugehörigen Kantenverarbeitungsmaschine und/oder oberhalb und/oder unterhalb und/oder innerhalb einer zugehörigen Kantenverarbeitungsmaschine angeordnet oder entfernt von der Kantenverarbeitungsmaschine als Kantenlager ausgebildet.

Je nach Größe und Ausführungsform kann es sein, dass eine Manipulationsvorrichtung nicht ausreicht und der Sekundärkassettenvorrat durch mindestens einen weiteren Manipulator gemanagt wird. In einer besonders bevorzugten Ausführungsform umfasst der Sekundärkassettenvorrat daher eine Vorratsbedienungseinrichtung, die dazu ausgelegt ist, eine Kassette an eine Bereitstellungs- oder Rückführungsvorrichtung zu übergeben und/oder aus dieser zu entnehmen; und/oder dass der Sekundärkassettenvorrat von einer Transporteinrichtung direkt beschickbar ist.

In einer weiteren ganz besonders bevorzugten Ausführungsform ist die Manipulationsvorrichtung dazu ausgelegt, eine Vorratsbedienungseinrichtung des Sekundärkassettenvorrats direkt mit Kassetten zu beschicken und/oder Kassetten unmittelbar aus dem Sekundärkassettenvorrat zu entnehmen.

Der Sekundärkassettenvorrat weist eine Bereitstellungsoder Rückführungsvorrichtung auf, mittels derer die aus dem Primärkassettenvorrat übergebenen Kassetten vom Sekundärkassettenvorrat aufgenommen und/oder die vom Sekundärkassettenvorrat zur Übergabe an den Primärkassettenvorrat bestimmten Kassetten bereitgestellt werden können.

Gerade bei häufigen Auftragswechseln der Kantenverarbeitungsmaschine oder bei größeren Sekundärkassettenvorraten kann es passieren, dass die Abstimmung zwischen einzelnen Manipulatoren und/oder zwischen den Manipulatoren und der Bereitstellungs- oder Rückführungsvorrichtung nicht immer reibungslos erfolgt. Hierzu ist es sinnvoll, die Übergabe mit einem Puffer zu versehen, der von einer Seite bestückt wird, was die andere Seite zu einem späteren Zeitpunkt entnimmt. In einer weiteren besonders bevorzugten Ausführungsform der Kantenverarbeitungsanlage umfasst die Bereitstellungs- oder Rückführungsvorrichtung daher einen Puffer zur Zwischenspeicherung von Kassetten außerhalb des Primärkantenvorrats und des Sekundärkantenvorrats oder er ist an einen solchen angeschlossen.

In den bisher diskutierten Ausführungen der Kantenverarbeitungsanlage ist immer von Kassetten die Rede, in denen das Kantenband bevorratet und zu der Verarbeitungsmaschine hin transportiert wird. Diese Art, das Kantenband zu lagern und zu transportieren ist keine ausschließliche Form der Kantenbandhandhabung. In einer weiteren Ausführungsform der Kantenverarbeitungsanlage ist/sind der Primärkassettenvorrat und/oder der Sekundärkassettenvorrat und/oder das zentrale Kantenlager und/ oder die Manipulationseinrichtung zur Aufnahme und/oder Verarbeitung und/oder zum Handling von kassettenfreien Kantenbandrollen ausgelegt.

### Weg zur Ausführung der Erfindung

Die Erfindung soll im Folgenden an Ausführungsbeispielen näher erläutert werden.
Figur 1 zeigt einen Teil einer nicht erfindungsgemäßen Kantenverarbeitungsanlage.
Figur 2 zeigt eine nicht erfindungsgemäße Anlage mit einem beigestellten Sekundärkassettenvorrat.
Figur 3 zeigt eine erfindungsgemäße Kantenverarbeitungsanlage mit einem Sekundärkassettenvorrat, der oberhalb der Kantenverarbeitungsmaschine angeordnet ist.
Figur 4 zeigt eine Kantenverarbeitungsanlage, bei der aus einem zentralen Kantenlager heraus zwei Kantenverarbeitungsmaschinen indirekt mit Kantenbändern versorgt werden.

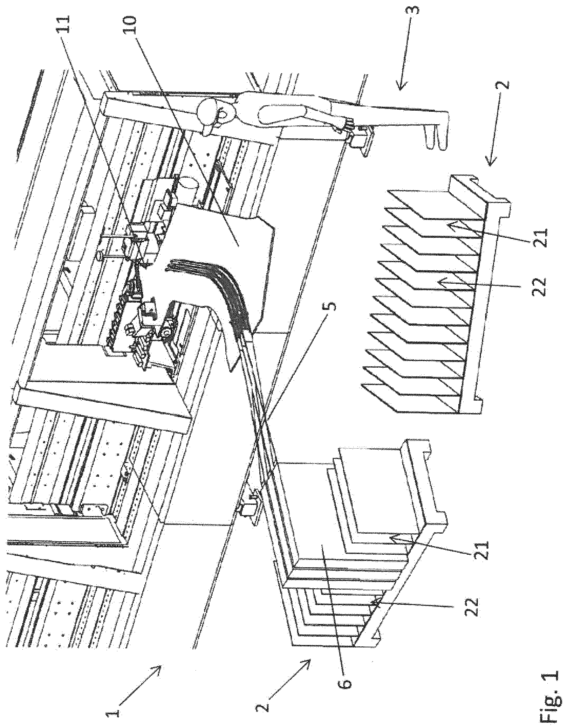

Der Ausschnitt in Figur 1 zeigt eine Kantenverarbeitungsmaschine 1, in welchem die Kantenbänder 5 dem zur Maschine gehörenden Kantenmagazin 10, 11 zugeführt werden. Hierzu entnimmt der Bediener 3, die Kantenbänder 5 aus Kassetten 6, die in dem Primärkassettenvorrat 2 angeordnet sind. Der Primärkassettenvorrat 2 weist eine Reihe von Aufnahmeplätzen 21, 22 auf, in denen die Kassetten 6 abgestellt werden. In dem gezeigten Beispiel sind zwei Elemente (eines ist auch vorstellbar) eines Primärkassettenvorrats 2 gezeigt, die um das Kantenmagazin 10, 11 herum angeordnet sind. In der gezeigten Anlage hat, neben der oben beschriebenen Aufgabe, der Bediener 3 auch den Primärkassettenvorrat 2 zu bestücken und die nicht mehr benötigten Kassetten 6 zu entfernen.

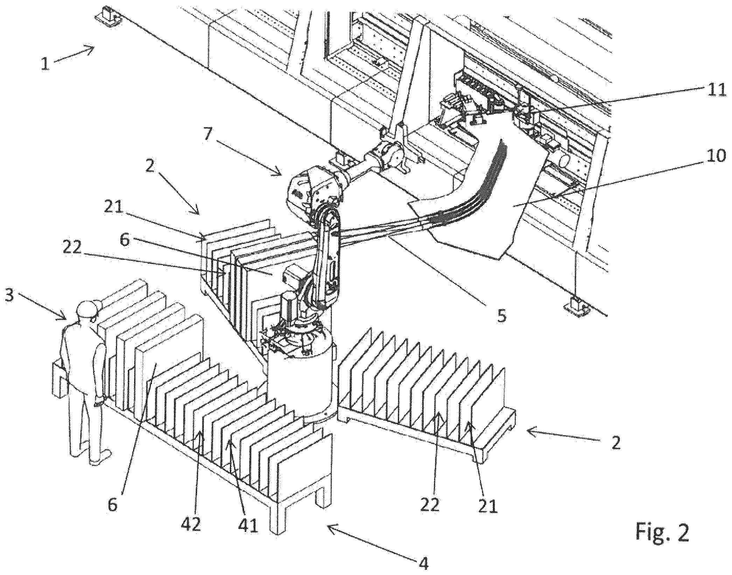

Die in Figur 2 gezeigte Ausführungsform der Kantenverarbeitungsanlage wurde zum einen ergänzt um eine Manipulationsvorrichtung 7, die in Reichweite des wenigstens einen Elements des Primärkassettenvorrats 2 platziert ist, und zum anderen um einen Sekundärkassettenvorrat 4, der, von der Kantenverarbeitungsmaschine 1 aus betrachtet, hinter dem Primärkassettenvorrat 2 angeordnet ist. Die hier gezeigte Manipulationsvorrichtung 7 übernimmt die Aufgaben, die Kantenbänder 5 aus den im Primärkassettenvorrat 2 gelagerten Kassetten 6 dem Kantenmagazin 10, 11 zuzuführen, die Aufnahmeplätze 21, 22 mit Kassetten 6 aus dem Sekundärkassettenvorrat 4 zu bestücken und nicht mehr unmittelbar benötigte Kassetten 6 aus dem Primärkassettenvorrat 2 auf Ablageplätze 41, 42 des Sekundärkassettenvorrats 4 zu transportieren. Mit einer derartigen Kantenverarbeitungsanlage wird die unmittelbare Versorgung der Kantenverarbeitungsmaschine 1 mit Kantenbändern 5 mittels einer automatischen Manipulationsvorrichtung 7 sichergestellt. Die Aufgabe des Bedieners ist es, den Sekundärkassettenvorrat 4 mit entsprechenden Kassetten 6 zu befüllen bzw. nicht mehr benötigte Kassetten 6 zu entfernen. Der hier gezeigte Sekundärkassettenvorrat 4 ist von der Anzahl der Ablageplätze 41, 42 stark begrenzt.

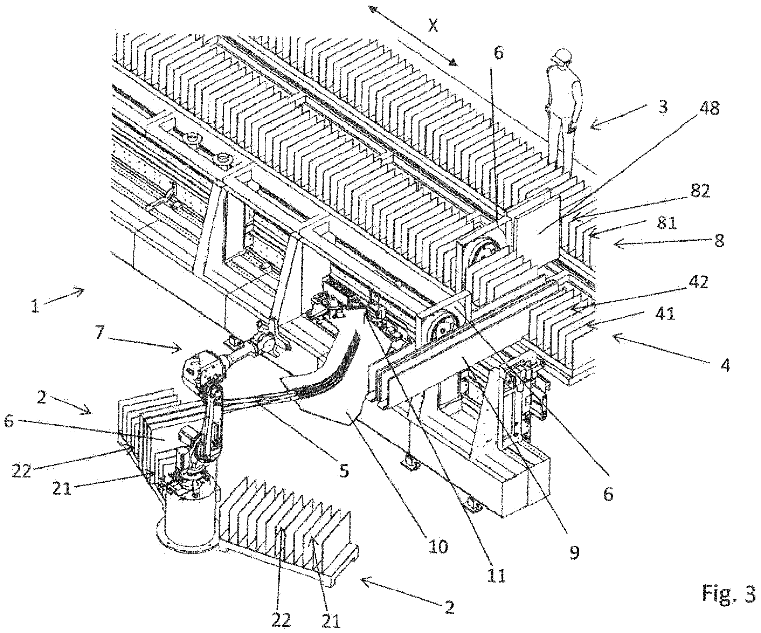

In Figur 3 wird eine Kantenverarbeitungsanlage mit einem größeren Sekundärkassettenvorrat 4, 8 gezeigt. Der in der Figur 3 gezeigte Sekundärkassettenvorrat 4, 8 ist oberhalb und, von der Manipulationsvorrichtung 7 aus betrachtet, hinter der Kantenverarbeitungsmaschine 1 angeordnet. Bei einer solchen Anordnung ist es für die Manipulationsvorrichtung 7 schwierig bis unmöglich, direkt auf die Kassetten 6 auf den Ablageplätzen 41, 42, 81, 82 zuzugreifen. Der Sekundärkassettenvorrat 4, 8 ist deshalb mit einer Bereitstellungs- oder Rückführungsvorrichtung 9 ausgestattet, von der aus die Manipulationsvorrichtung 7 Kassetten 6 entnehmen und in den Primärkassettenvorrat 2 ablegen, bzw. nicht mehr benötigte Kassetten 6 aus dem Primärkassettenvorrat 2 zur Ablage in dem Sekundärkassettenvorrat 4, 8 ablegen kann. Auf der Sekundärkassettenvorratsseite 4, 8 wird die Bereitstellungs- oder Rückführungsvorrichtung 9 von einer Vorratsbedieneinrichtung 48 versorgt. Die Vorratsbedienvorrichtung 48 bewegt sich dabei entlang der Anordnung der Ablageplätze 41, 42 bzw. 81, 82 des Sekundärkassettenvorrats 4, 8 in Richtung X. Dabei entnimmt die Vorratsbedieneinrichtung 48 die angeforderte Kassette 6 aus dem entsprechenden Ablageplatz 41, 42, 81, 82 des Sekundärkassettenvorrats 4, 8 und führt diese der Bereitstellungs- und Rückführungsvorrichtung 9 zu. Für die Rückführung entnimmt die Vorratsbedieneinrichtung 48 die von der Manipulationsvorrichtung 7 zugeführten Kassetten 6 aus der Bereitstellungsoder Rückführungsvorrichtung 9 und stellt diese auf einem der Ablageplätze 41, 42, 81, 82 des Sekundärkassettenvorrats 4, 8 ab.

Die Bereitstellungs- oder Rückführungsvorrichtung 9 ist in dem gezeigten Ausführungsbeispiel so ausgeführt, dass sie sowohl bei der Bereitstellung wie auch bei der Rückführung mehrere Kassetten aufnehmen kann. Die Vorratsbedieneinrichtung 48 kann somit mehrere Kassetten 6 in der Bereitstellungs- oder Rückführungsvorrichtung 9 ablegen und ist nicht darauf angewiesen, dass die Manipulationsvorrichtung 7 die Kassetten direkt abnimmt. Gleichzeitig kann die Manipulationsvorrichtung 7 mehrere Kassetten 6 zur Rückführung in die Bereitstellungs- oder Rückführungsvorrichtung 9 abstellen, ehe die Vorratsbedieneinrichtung 48 diese der Bereitstellungs- oder Rückführungsvorrichtung 9 zur Einlagerung in den Sekundärkassettenvorrat 4, 8 übernimmt. Mit diesem Puffer, den die Bereitstellungs- oder Rückführungsvorrichtung 9 bereitstellt, können die Manipulationsvorrichtung 7 und die Vorratsbedienungseinrichtung 48 etwas unabhängiger voneinander agieren.

In dieser in Fig. 3 gezeigten Ausführungsform obliegt es dem Bediener 3, das Sekundärkassettenlager 4, 8 zu pflegen, indem er dieses mit Kassetten 6 aus dem zentralen Kantenlager 30 (hier nicht gezeigt) bestückt, und nicht mehr mittelbar benötigte Kassetten 6 aus dem Sekundärkassettenlager 4, 8 entfernt. Die Größe eines derartigen Sekundärkassettenvorrats 4, 8 kann die Größe und Aufgabe eines dezentralen Kantenlagers einnehmen.

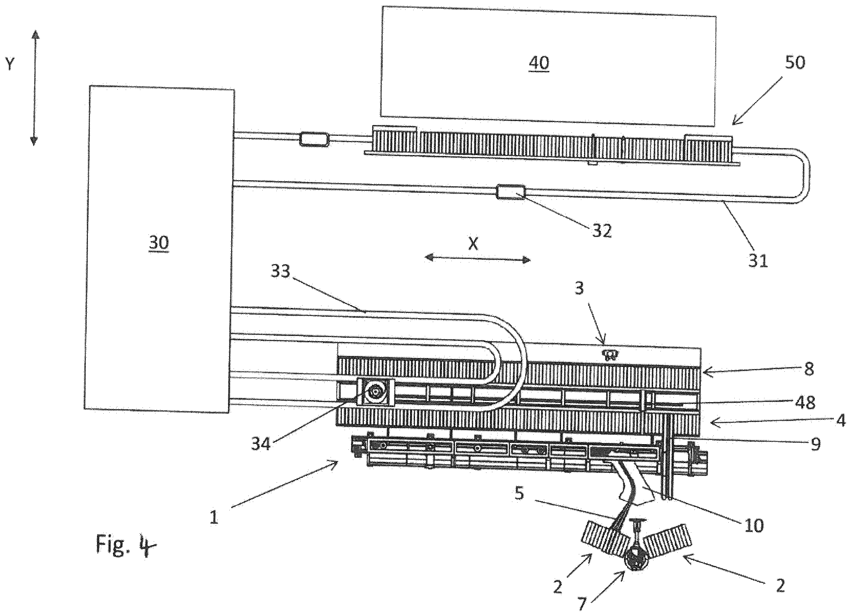

Figur 4 zeigt schematisch eine weitere Ausführungsform der erfindungsgemäßen Kantenverarbeitungsanlage in Draufsicht. Im rechten unteren Teil von Fig. 4 ist eine Anlage gezeigt, wie sie zu Fig. 3 beschrieben worden ist. In dieser Ausführungsform ist der Sekundärkassettenvorrat 4, 8 mit dem zentralen Kantenlager 30 mittels einer Transportvorrichtung 33 verbunden. Die Transportvorrichtung 33 ist mit einer Kassettentransporteinrichtung 34 versehen, die Kassetten 6 aus dem zentralen Kantenlager 30 zum Sekundärkassettenvorrat 4, 8 befördert und/oder Kassetten 6 aus dem Sekundärkassettenvorrat 4, 8 ins zentrale Kantenlager 30 zurückführt. Die höchstens noch verbleibende Aufgabe des Bedieners 3 ist, die Funktionalität der Komponenten der Kantenverarbeitungsanlage zu überwachen. Schematisch dargestellt ist eine weitere Transportvorrichtung 31 mit entsprechender Kassettentransporteinrichtung 32, die einen weiteres Sekundärkassettenvorrat 50 ver- bzw. entsorgt. Der Sekundärkassettenvorrat 50 versorgt eine weitere Kantenverarbeitungsmaschine 40 mit entsprechendem Primärkassettenvorrat, wie es bereits oben beschrieben wurde. Das zentrale Kantenlager 30 kann auch mehr als zwei Kantenverarbeitungsmaschinen 1, 40 bedienen.

Es ist zudem möglich, den Sekundärkassettenvorrat 4, 8, 50 anders gegenüber den Kantenverarbeitungsmaschinen 1, 40 anzuordnen. So ist es durchaus möglich, den Sekundärkassettenvorrat 4, 8, 50 quer zu der dargestellten Ausrichtung anzuordnen. Damit wäre es beispielsweise möglich, aus einem Sekundärkassettenvorrat 4, 8, 50 heraus mehr als eine Kantenverarbeitungsmaschine 1, 40 zu bedienen.

## Patentansprüche

1. Kantenverarbeitungsanlage, welche wenigstens eine Kantenverarbeitungsmaschine (1, 40), an welcher ein Kantenmagazin (10) angebracht ist, und wenigstens einen in räumlicher Nähe zum Kantenmagazin (10) der Kantenverarbeitungsmaschine (1, 40) angeordneten Primärkassettenvorrat (2) aufweist, welcher eine Mehrzahl Aufnahmeplätze (21, 22) aufweist, in welche Kassetten (6) aufgenommen werden können oder sind, die jeweils ein Kantenband (5) beinhalten, wobei die Kantenverarbeitungsanlage weiter wenigstens einen vom Primärkassettenvorrat (2) verschiedenen Sekundärkassettenvorrat (4, 8, 50) umfasst, welcher räumlich separat von dem Primärkassettenvorrat (2) angeordnet ist,
der Sekundärkassettenvorrat (4, 8, 50) eine Vorratsbedienungseinrichtung (48) umfasst, die dazu ausgelegt ist,
i) eine Kassette (6) innerhalb des Sekundärkassettenvorrats (4, 8, 50) aus einem dortigen Ablageplatz (41, 42, 81, 82) zu entnehmen; und/ oder
ii) eine Kassette (6) innerhalb des Sekundärkassettenvorrats (4, 8, 50) in einen dortigen Ablageplatz (41, 42, 81, 82) abzulegen,
**dadurch gekennzeichnet, dass**
der Sekundärkassettenvorrat (4, 8, 50) eine Bereitstellungs- oder Rückführungsvorrichtung (9) aufweist, mittels derer die aus dem Primärkassettenvorrat (2) übergebenen Kassetten (6) vom Sekundärkassettenvorrat (4, 8, 50) aufgenommen und/oder die vom Sekundärkassettenvorrat (4, 8, 50) zur Übergabe an den Primärkassettenvorrat (2) bestimmten Kassetten (6) bereitgestellt werden können, wobei die Kantenverarbeitungsanlage wenigstens eine automatisierte Manipulationsvorrichtung (7) umfasst, die dazu ausgelegt ist:
i) Kassetten (6) aus dem Primärkassettenvorrat in den Sekundärkassettenvorrat (4, 8, 50) und/oder aus dem Sekundärkassettenvorrat (4, 8, 50) in den Primärkassettenvorrat zu überführen; und/ oder
ii) die Kassette (6) auf einer insbesondere als Kassettentransportwagen ausgebildeten Kassettentransporteinrichtung (32; 34) abzulegen oder aus dieser zu entnehmen.

2. Kantenverarbeitungsanlage nach Anspruch 1,
**dadurch gekennzeichnet,**
**dass** der wenigstens eine Sekundärkassettenvorrat (4, 8, 50) auf dem Boden benachbart zu einer zugehörigen Kantenverarbeitungsmaschine (1, 40) und/oder oberhalb und/oder unterhalb und/oder innerhalb einer zugehörigen Kantenverarbeitungsmaschine (1, 40) angeordnet oder entfernt von der Kantenverarbeitungsmaschine als Kantenlager ausgebildet ist.

3. Kantenverarbeitungsanlage nach einem der vorigen Ansprüche,
**dadurch gekennzeichnet,**
**dass** der Sekundärkassettenvorrat (4, 8, 50) eine Vorratsbedienungseinrichtung (48) umfasst, die dazu ausgelegt ist, eine Kassette (6) an eine Bereitstellungs- oder Rückführungsvorrichtung (9) zu übergeben und/ oder aus dieser zu entnehmen; und/oder dass der Sekundärkassettenvorrat (4, 8, 50) von einer Transporteinrichtung (32; 34) direkt beschickbar ist.

4. Kantenverarbeitungsanlage nach Anspruch 3,
**dadurch gekennzeichnet,**
**dass** die Manipulationsvorrichtung (7) dazu ausgelegt ist, die Vorratsbedienungseinrichtung (48) des Sekundärkassettenvorrats (4, 8, 50) direkt mit Kassetten (6) zu beschicken und Kassetten (6) unmittelbar aus dem Sekundärkassettenvorrat (4, 8, 50) zu entnehmen.

5. Kantenverarbeitungsanlage nach einem der vorigen Ansprüche,
**dadurch gekennzeichnet,**
**dass** die Bereitstellungs- oder Rückführungsvorrichtung (9) einen Puffer zur Zwischenspeicherung von Kassetten (6) außerhalb des Primärkantenvorrats (2) und des Sekundärkantenvorrats (4, 8, 50) umfasst oder an einen solchen angeschlossen ist.

6. Kantenverarbeitungsanlage nach einem der vorigen Ansprüche,
**dadurch gekennzeichnet,**
**dass** diese ein zentrales Kantenlager (30) umfasst, welches über Transportvorrichtungen (31, 33) mit wenigstens einem Sekundärkassettenvorrat (4, 8, 50), bevorzugt zwei Sekundärkassettenvorräten (4, 8, 50), und/oder wenigstens einem Primärkassettenvorrat (2) logistisch verbunden ist.

7. Kantenverarbeitungsanlage nach einem der vorigen Ansprüche,
**dadurch gekennzeichnet,**
**dass** die Transportvorrichtungen (31, 33) Transportmittel (32, 34) umfassen, welche dazu ausgelegt sind, im zentralen Kantenlager (30) bevorratete Kassetten (6) von dem zentralen Kantenlager (30) zu wenigstens einem Sekundärkassettenvorrat (4, 8, 50) zu befördern oder/und Kassetten (6) aus wenigstens einem Sekundärkassettenvorrat (4, 8, 50) und/oder einem Primärkassettenvorrat (2) zum zentralen Kantenlager (30) zu befördern.

8. Kantenverarbeitungsanlage nach einem der vorigen Ansprüche,
**dadurch gekennzeichnet,**
**dass** der Primärkassettenvorrat (2) und/oder der Sekundärkassettenvorrat (4, 8, 50) und/oder das zentrale Kantenlager (30) und/oder die Manipulationseinrichtung (7) zur Aufnahme und/oder Verarbeitung und/ oder zum Handling von kassettenfreien Kantenbandrollen ausgelegt sind.

9. Kantenverarbeitungsanlage nach einem der vorigen Ansprüche,
**dadurch gekennzeichnet,**
**dass** die Manipulationsvorrichtung (7) dazu ausgelegt ist, ein Kantenband (5), welches sich in einer im Primärkassettenvorrat (2) an einem Aufnahmeplatz (21, 22) befindlichen Kassette (6) befindet, dem Kantenmagazin (10) der Kantenverarbeitungsmaschine (1, 40) zuzuführen oder/und aus dem Kantenmagazin (10) wieder in die Kassette (6) zurückzuziehen.

## Claims

1. Edgebanding system which comprises at least one edgebanding machine (1, 40) to which an edging magazine (10) is attached, and at least one primary cassette supply (2) which is arranged close to the edging magazine (10) of the edgebanding machine (1, 40) and which has a plurality of receiving spaces (21, 22) in which cassettes (6), which each contain an edging band (5), can be or are accommodated, wherein the edgebanding system further comprises at least one secondary cassette supply (4, 8, 50) which is different from the primary cassette supply (2) and which is arranged spatially separately from the primary cassette supply (2),
the secondary cassette supply (4, 8, 50) comprises a supply servicing installation (48) which is set up
i) to remove a cassette (6) inside the secondary cassette supply (4, 8, 50) from a storage place (41, 2, 81, 82) therein; and/or
ii) to deposit the cassette (6) inside the secondary cassette supply (4, 8, 50) in storage place (41, 42, 81, 82) therein,
**characterised in that**
the secondary cassette supply (4, 8, 50) has a supply device or return device (9) by means of which the cassettes (6) transferred from the primary cassette supply (2) are received by the secondary cassette supply (4, 8, 50) and/or the cassettes (6) intended for transfer to the primary cassette supply (2) by the secondary cassette supply (4, 8, 50) can be prepared, wherein the edgebanding system comprises at least one automated manipulation device (7) which is set up:
i) to transfer cassettes (6) from the primary cassette supply into the secondary cassette supply (4, 8, 50) and/or from the secondary cassette supply (4, 8, 50) into the primary cassette supply; and/or
ii) to deposit the cassette (6) onto a cassette transport unit (32; 34) formed in particular as a cassette transport carriage or to remove the cassette from the latter.

2. Edgebanding system according to Claim 1,
**characterised in that**
the at least one secondary cassette supply (4, 8, 50) is arranged at the bottom adjacent an associated edgebanding machine (1, 40) and/or above and/or below and/or within an associated edgebanding machine (1, 40), or is configured as an edging store at a distance from the edgebanding machine.

3. Edgebanding system according to one of the preceding claims
**characterised in that**
the secondary cassette supply (4, 8, 50) comprises a supply servicing installation (48) which is set up to transfer a cassette (6) to a supply or return device (9) and/or to remove it therefrom; and/or that the secondary cassette supply (4, 8, 50) can be loaded directly from a transport unit (32;34).

4. Edgebanding system according to claim 3
**characterised in that**
the manipulation device (7) is set up to load the supply servicing unit (48) of the secondary cassette supply (4, 8, 50) directly with cassettes (6) and to remove cassettes (6) directly from the secondary cassette supply (4, 8, 50).

5. Edgebanding system according to one of the preceding claims
**characterised in that**
the supply or return device (9) comprises a buffer for the intermediate storage of cassettes (6) outside of the primary edge supply (2) and secondary edge supply (4, 8, 50), or is connected to a buffer of this kind.

6. Edgebanding system according to one of the preceding claims
**characterised in that**
it comprises a central edging store (30) which is connected logistically via transport devices (31, 33) to at least one secondary cassette supply (4, 8, 50), preferably to two secondary cassette supplies (4, 8, 50), and/or to at least one primary cassette supply (2).

7. Edgebanding system according to one of the preceding claims
**characterised in that**
the transport devices (31, 33) comprise transport means (32, 34) which are set up to convey cassettes (6) supplied in the central edging store (30) from the central edging store (30) to at least one secondary cassette supply (4, 8, 50), and/or to convey cassettes (6) from at least one secondary cassette supply (4, 8, 50) and/or from a primary cassette supply (2) to the central edging store (30).

8. Edgebanding system according to one of the preceding claims
**characterised in that**
the primary cassette supply (2) and/or the secondary cassette supply (4, 8, 50) and/or the central edging store (30) and/or the manipulation unit (7) are set up for receiving and/or processing and/or handling cassette-free edgebanding rollers.

9. Edgebanding system according to one of the preceding claims
**characterised in that**
the manipulation device (7) is set up to supply an edging band (5), which is located in a cassette (6) situated at a receiving place (21, 22) in the primary cassette supply (2), to the edging magazine (10) of the edgebanding machine (1, 40), or to remove said edging band (5) from the edging magazine (10) back again into the cassette (6).

## Revendications

1. Installation de traitement de chants, comprenant au moins une machine de traitement de chants (1, 40), sur laquelle est monté un magasin de chants (10), et au moins un réservoir de cassettes principal (2), agencé à proximité dans l'espace du magasin de chants (10) de la machine de traitement de chants (1, 40), comprenant une pluralité d'emplacements de logement (21, 22), dans lesquels peuvent être logées ou sont logées des cassettes (6), contenant respectivement une alaise de chants (5), dans lequel l'installation de traitement de chants comporte en outre au moins un réservoir de cassettes secondaire (4, 8, 50), qui diffère du réservoir de cassettes principal (2), qui est agencé de façon à être séparé dans l'espace du réservoir de cassettes principal (2),
le réservoir de cassettes secondaire (4, 8, 50) comprenant un dispositif d'utilisation de réserve (48) qui est conçu pour
i) retirer une cassette (6) dans le réservoir de cassettes secondaire (4, 8, 50) à partir d'un emplacement de rangement (41, 42, 81, 82) de celui-ci; et / ou
ii) déposer une cassette (6) à l'intérieur du réservoir de cassettes secondaire (4, 8, 50) dans un emplacement de rangement (41, 42, 81, 82) de celui-ci,
**caractérisé en ce que**
le réservoir de cassettes secondaire (4, 8, 50) comporte un dispositif de présentation ou de retour (9), au moyen duquel les cassettes (6) transférées à partir du réservoir de cassettes principal (2) peuvent être reçues par le réservoir de cassettes secondaire (4, 8, 50), et / ou les cassettes (6), destinées à être transférées du réservoir de cassettes secondaire (4, 8, 50) au réservoir de cassettes principal (2) peuvent être fournies, dans lequel l'installation de traitement de chants comporte au moins un moyen de manipulation (7) automatique, qui est conçu pour :
i) transférer des cassettes (6) à partir du réservoir de cassettes principal (2) au réservoir de cassettes secondaire (4, 8, 50) et / ou
du réservoir de cassettes secondaire (4, 8, 50) dans le réservoir de cassettes principal (2); et / ou
ii) déposer la cassette (6) sur un moyen de transport de cassettes (32; 34), formé surtout en tant que chariot de transport de cassettes, ou pour la retirer de celui-ci.

2. Installation de traitement de chants selon la revendication 1,
**caractérisé en ce**
**que** l'au moins un réservoir de cassettes secondaire (4, 8, 50) est formé en tant que stockage de chants agencé sur le sol adjacent à une machine de traitement de chants (1, 40) associée et / ou au-dessus ou en dessous de et / ou dans une machine de traitement de chants (1, 40) associée, ou éloigné de la machine de traitement de chants.

3. Installation de traitement de chants selon l'une quelconque des revendications précédentes,
**caractérisé en ce**
**que** le réservoir de cassettes secondaire (4, 8, 50) comporte un dispositif d'utilisation de réserve (48), qui est conçu pour transférer une cassette (6) à un dispositif de présentation ou de retour (9) et / ou de la retirer de celui-ci; et / ou que le réservoir de cassettes secondaire (4, 8, 50) peut être directement alimenté par un moyen de transport (32; 34).

4. Installation de traitement de chants selon la revendication 3,
**caractérisé en ce**
**que** le moyen de manipulation (7) est conçu pour alimenter directement avec des cassettes (6) le dispositif d'utilisation de réserve (48) du réservoir de cassettes secondaire (4, 8, 50), et pour retirer directement des cassettes (6) du réservoir de cassettes secondaire (4, 8, 50).

5. Installation de traitement de chants selon l'une quelconque des revendications précédentes,
**caractérisé en ce**
**que** le dispositif de présentation ou de retour (9) comporte une zone tampon pour le stockage intermédiaire des cassettes (6) en dehors du réservoir de cassettes principal (2) et du réservoir de cassettes secondaire (4, 8, 50), ou est relié à une telle zone tampon.

6. Installation de traitement de chants selon l'une quelconque des revendications précédentes,
**caractérisé en ce**
**que** celle-ci comporte un stockage de chants central (30) qui est relié logistiquement par l'intermédiaire des dispositifs de transport (31, 33) avec au moins un réservoir de cassettes secondaire (4, 8, 50), de préférence, deux réservoirs de cassettes secondaire (4, 8, 50), et / ou au moins un réservoir de cassettes principal (2).

7. Installation de traitement de chants selon l'une quelconque des revendications précédentes,
**caractérisé en ce**
**que** les dispositifs de transport (31, 33) comportent des moyens de transport (32, 34), qui sont conçus pour transporter des cassettes (6), stockées dans le stockage de chants central (30) à partir du stockage de chants central (30) à au moins un réservoir de cassettes secondaire (4, 8, 50), et / ou pour transporter des cassettes (6) d'au moins un réservoir de cassettes secondaire (4, 8, 50) et / ou un réservoir de cassettes principal (2) au stockage de chants central (30).

8. Installation de traitement de chants selon l'une quelconque des revendications précédentes,
**caractérisé en ce**
**que** le réservoir de cassettes principal (2) et / ou le réservoir de cassettes secondaire (4, 8, 50) et / ou le stockage de chants central (30) et / ou le moyen de manipulation (7) sont conçus pour le logement et / ou le traitement et / ou le maniement des rouleaux des alaises de chants sans cassettes.

9. Installation de traitement de chants selon l'une quelconque des revendications précédentes,
**caractérisé en ce**
**que** le moyen de manipulation (7) est conçu pour alimenter un alaise de chants (5), se trouvant dans une cassettes (6), qui se trouve dans un réservoir de cassettes principal (2) sur un emplacement de logement (21, 22), au magasin de chants (10) de la machine de traitement de chants (1, 40), et / ou pour le retirer de nouveau du magasin de chants (10) dans la cassette (6).
